# EUROPEAN PATENT SPECIFICATION

(11) **EP 1 895 834 B1**
(45) Date of publication and mention of the grant of the patent: **17.06.2009**
(21) Application number: 06726816.9
(22) Date of filing: 19.04.2006
(51) Int. Cl.: A01K 61/00, A01K 79/00

(54) **APPARATUS AND METHOD FOR INFLUENCING FISH SWIMMING BEHAVIOUR**
VORRICHTUNG UND VERFAHREN ZUR BEEINFLUSSUNG DES SCHWIMMVERHALTENS VON FISCHEN
APPAREIL ET PROCEDE PERMETTANT D'INFLUENCER LA NAGE DU POISSON

(30) Priority: 20.04.2005 GB 0507965
(43) Date of publication of application: 12.03.2008
(73) Proprietor: THE UNIVERSITY COURT OF THE UNIVERSITY OF GLASGOW, Glasgow G12 8QQ (GB)
(72) Inventor: HERBERT, Neill Andrew, Bearsden, Glasgow G61 3RA (GB); SINCLAIR, James, Carluke Lanarkshire ML8 5QR (GB)
(74) Representative: Naylor, Matthew John
(86) International application number: PCT/GB2006/001424
(87) International publication number: WO 2006/111739

(56) References cited:
- NL-C2- 1 009 474
- US-A- 3 802 109
- US-A- 6 160 759
- PATENT ABSTRACTS OF JAPAN vol. 2003, no. 01, 14 January 2003 (2003-01-14) & JP 2002 262719 A (FISHERIES RESEARCH AGENCY), 17 September 2002 (2002-09-17)

## Description

### Field of the Invention

The present invention relates to an apparatus and method for influencing fish swimming behaviour. The invention uses a moving visual stimulus to influence fish swimming behaviour particularly, but not necessarily exclusively, for fish farming applications.

### Related Art

Previous research has used water currents to control fish swimming behaviour. Such research has used water currents to encourage fish to swim against the current. This research shows that the productivity and quality of farmed fish can be improved markedly when optimal swimming speeds are held over prolonged periods of time. [References: Nahhas et al. 1982; Leon, 1986; Houlihan and Laurent, 1987; East and Magnan, 1987; Totland et al. 1987; Christiansen et al. 1989; Christiansen and Jobling, 1990; Christiansen et al. 1992; Hinterleitner et al., 1992; Jobling et al., 1993; Jørgensen and Jobling, 1993; Young and Cech, 1993b, 1994a, 1994b; Hammer, 1994; Yogata and Oku 2000; Azuma, 2001].

It is known that the optimal swimming speed varies according to the species of fish and conditions (e.g. water currents and the degree of curvi-linear swimming) : Optimal swimming speed is a balance between a state of inactivity (where the positive benefits of exercise training cannot be gained) and excessive exercise (where excess energy is consumed by that given level of activity).

It is known that pronounced increases in growth can be achieved when optimal.swimming speeds are maintained for prolonged periods of time. This is considered beneficial for commercial fish farming because it allows more production cycles per annum and/or more time to fallow seacage sites between rearing periods. [References: Nahhas et al. 1982; Leon, 1986; Houlihan and Laurent, 1987; East and Magnan, 1987; Totland et al. 1987; Christiansen et al. 1989; Christiansen and Jobling, 1990; Christiansen et al. 1992; Hinterleitner et al., 1992; Jobling et al., 1993; Jørgensen and Jobling, 1993; Young and Cech, 1993b, 1994a, 1994b; Hammer, 1994; Yogata and Oku 2000; Azuma, 2001.]

It is also known that food conversion efficiency is improved markedly (typically by about 20%) when optimal swimming speeds are maintained for prolonged periods of time. Since feed represents about 60% of total production cost in commercial fish farming, significant savings can be gained by the fish farming industry if optimal swimming speeds are sustained. [References: Leon, 1986; East and Magnan, 1987; Christiansen and Jobling, 1990; Christiansen et al. 1992; Jobling et al., 1993; Jørgensen and Jobling, 1993; Yogata and Oku 2000.]

Fish growth is often variable within a given stock but more uniform rates of weight increase and length increase can be achieved with sustained optimal swimming. It will be understood that a narrower size distribution for farmed fish is advantageous since then a higher proportion of the fish will be suitable for sale and consumption at premium prices. Conventional size grading techniques require time and effort and are stressful for fish but this procedure can be reduced to a minimum when uniform rates of growth are maintained.
[References: East and Magnan, 1987; Jobling et al., 1993; Jørgensen and Jobling, 1993.]

The composition, texture and taste of fish fillets ultimately determines the final value of the aquacultural product and these are all improved when fish swim for prolonged periods at their optimal swimming speed. Various scientific reports have demonstrated that sustained swimming improves muscular development (via changes in muscle fibre size, diameter and capillarization), the biochemical and energetic composition of flesh (via changes in lipid, glycogen and water etc) as well as the taste and organoleptic property of,flesh. [References: Greer Walker and Pull, 1973; Davison and Goldspink, 1977; Johnston and Moon, 1980; Davie et al., 1986; Totland et al. 1987; Christiansen et al. 1989; Hinterleitner et al., 1992; Singer, 1992; Young and Cech, 1993b, 1994a, 1994b; Yogata and Oku, 2000.]

High density rearing and routine aquacultural processes (e.g. hauling, size grading and transport) can induce "stress" in farmed fish and can also have other undesirable consequences. This can lead in turn to reduced flesh quality in the final product.

Sustained optimal swimming of a population of fish in the same direction has been shown to reduce basal stress levels and the number of aggressive encounters amongst conspecifics. [References: Butler et al., 1986; East and Magnan, 1987; Lackner et al., 1988; Christiansen and Jobling, 1990; Christiansen et al., 1992; Boesgaard et al., 1993; Jørgensen and Jobling, 1993; Jobling et al., 1993; Young and Cech et al., 1993a, 1994b; Adams et al., 1995; Shanghavi and Weber, 1999; Milligan et al. 2000; Iguchi et al., 2002.]

It is known that the swimming behaviour of farmed fish can be controlled through manipulation of water currents. [References: East and Magnan, 1987; Totland et al. 1987; Christiansen et al. 1989; Christiansen and Jobling, 1990; Christiansen et al. 1992; Jobling et al., 1993; Jørgensen and Jobling, 1993; Young and Cech, 1993b, 1994a, 1994b; Yogata and Oku 2000; Azuma, 2001.] Indeed, in research into this area, the swimming speed of fish has only been manipulated with water currents to date. However, due to the logistics and cost of controlled pumping, this is both impractical in sea cages and uneconomic under most commercial farming conditions. For this reason it has not yet been possible to control fish swimming in increasingly high volume facilities even though a large proportion of commercial fish farming occurs in seacages and major benefits could be gained in terms of improved productivity and quality.

Furthermore, it is not practicable to use naturally occurring water currents for this application (e.g. river currents or tidal flows) since these are uncontrollable on a large scale and will not necessarily give rise to optimum swimming speeds.

### Summary of the Invention

In view of the difficulties associated with providing controllable water currents at a suitable scale for commercial fish farming, the present inventors have realised that there is a need for a more convenient system for stimulating fish to swim at or close to their optimum swimming speeds, so as to provide the various advantages that such swimming allows.

It is known that fish have the ability to maintain their position in water with respect to a visual stimulus. This is known as the optomotor response. This is an important innate behaviour for position stabilisation. There are several examples that demonstrate the functional basis of this naturally-occurring behaviour. In one example, stream-dwelling fishes (e.g. salmon) can freely swim in a stationary position in fast flows of water. These fish can hold their position in a flow because they visually "fit" their swimming position relative to the stationary background. Without this form of visual stabilisation they would be swept downstream. In another example, some fishes also use the optomotor response to maintain their position within a school. They assess their own position visually and adjust their swimming speed to maintain a tight schooling structure (see Shaw and Tucker, 1965).

It is known, via experiment, that the swimming optomotor response can be induced by establishing a moving visual stimulus beside a fish (i.e. fish will swim alongside a moving visual background). Experimental biologists have exploited the optomotor response to examine various biological properties and particularly the visual system of fish. For example, the minimum sensitivity of fish eyes to light can be determined by moving a mechanical background of black and white stripes around a fish in a stationary glass cylinder. A light source illuminates the black and white stripes and when the light level is increased to a point at which the fish can "see" the black and white stripes the fish will orientate (i.e. swim) with the moving background. The minimum level of light required to initiate the optomotor response is taken as the level of spectral sensitivity (Pener-Salomon, 1974. Teyssedre and Moller, 1982. van der Meer, 1994. Fuiman and Delbos, 1998. Hasegawa, 1998).

Using similar methodologies, the optomotor response has also been used as an experimental tool to test the following biological principles and properties in fish:
i. Wavelength sensitivity (Anstis et al. 1998).
ii. Visual acuity (Naeve, 1984; Pankhurst, 1994; van der Meer, 1994; Herbert and Wells, 2002; Herbert et al., 2002, 2003).
iii. Flicker fusion frequency/motion defection (Schaerer and Neumeyer, 1996).
iv. Ontogeny of visual systems (Neave, 1984. Kawamura and Washiyama, 1989. Pankhurst, 1994. Masuda and Tsukamoto, 1998).
v. Schooling behaviour (Shaw and Tucker, 1965. Kawamura and Hara, 1980. Fuiman and Delbos, 1998. Masuda and Tsukamoto, 1998. Veselov et al. 1998).
vi. Rheotactic behaviour (Harden-Jones, 1963. Veselov et al. 1998).
vii. Environmental conditions necessary to induce the optomotor response (Takahashi et al. 1968. Teyke and Schaerer, 1994).
viii. Effect of pollutants on behavioural changes (Richmonds and Dutta, 1992).
ix. Optomotor response in trawling nets (He and Wardle, 1988. Tang and Wardle, 1992.).
x. Rates of oxygen consumption (Dabrowski, 1986; Lucas et al., 1993; Wardle et al. 1996).

However, the present inventors have realised that the known systems for inducing optomotor response in fish are not suited to commercial fish farming applications. In particular, the moving parts required by known systems are not suitable for immersion in water and are not suitable for scaling up to the dimensions that would be required for commercial fish farming applications. Furthermore, such systems are complex and require regular maintenance.

Accordingly, in a general aspect, the present invention provides a moving visual stimulus to fish by operation in sequence of a series of light output members.

Preferably, in a first aspect, the present invention provides an enclosure for fish, defining a space within which the fish can swim, the enclosure having a series of light output members disposed along a substantially closed path to define a substantially continuous swimming route for the fish, said light output members being operable to provide a moving visual stimulus along the substantially closed path by output of light in sequence from the series of light output members, thereby influencing the swimming behaviour of the fish.

Preferably, in a second aspect, the present invention provides an apparatus for influencing the swimming behaviour of fish, the apparatus having:
a plurality of light output modules each providing one or more light output members, said modules being for arrangement so as to organise the light output members in a series along a substantially closed path to define a substantially continuous swimming route for the fish;
control means for controlling the light output members
wherein each light output module is adapted for at least partial submersion in water and the control means is capable of controlling the light output members to provide a moving visual stimulus along the substantially closed path by output of light in sequence from the series of light output members.

Preferably, in a third aspect, the present invention provides an enclosure for fish, defining a space within which the fish can swim, the enclosure having an apparatus according to the second aspect.

Preferably, in a fourth aspect, the present invention provides a method of stimulating an optomotor response in fish including locating the fish in an enclosure having a series of light output members disposed along a substantially closed path to define a substantially continuous swimming route for the fish, said light output members being operated to.provide a moving visual stimulus along the substantially closed path by output of light in sequence from the series of light output members thereby to influence the swimming behaviour of the fish.

Preferably, in a fifth aspect, the present invention provides a method of stimulating an optomotor response in fish including locating the fish in an enclosure according to the first or third aspects, and operating the light output members to provide a moving visual stimulus along the path by output of light in sequence from the series of light output members thereby to influence the swimming behaviour of the fish.

Preferred and/or optional features will now be set out.
These are applicable either independently or in any combination to any of the aspects of the invention, unless the context demands otherwise.

Preferably, the series of light output members is disposed at an outer perimeter of the enclosure, the fish swimming space being located internally of the series of light output members. In this way, the fish are able to swim in a space that is enclosed not only by the enclosure but also (e.g. wholly or in part) by the series of light output members.

Additionally or alternatively, another series of light output members or said series of light output members is disposed at an inner perimeter of the enclosure, the fish swimming space being located externally of the series of light output members. In this way, the fish are able to swim around the series of light output member. It will be understood that it may be beneficial to locate one or more series of light output members in each position, so as to provide one or more moving visual stimulus or stimuli to the fish that is visible from a large proportion of the space within which the fish can swim.

The light output members themselves are intended to remain stationary with respect to the enclosure. In this way, it is not necessary to move the light output members in order to achieve a moving visual stimulus. Instead, it is the sequential output of light along the series of light output members, in use, that allows the production of the illusion of a moving visual stimulus.

The enclosure may be of any desired shape, provided that fish are free to swim within the space enclosed by the enclosure. For example, the enclosure may be circular or cylindrical, oval, racetrack-shaped, toroidal or another smooth or curved shape that defines a closed swimming route for the fish. Preferably, the series of light output members forms a substantially closed path to define a substantially continuous swimming route for the fish. In this way, the series of light output members may assist in encouraging advantageous swimming behaviour substantially all around the fish swimming route.

Preferably, the enclosure has boundaries (e.g. walls) that permit the flow of water through them. For example, the boundaries may include a cage, mesh or net for submersion in a body of water such as saltwater or freshwater (e.g. a lake, inlet, sound, loch, sea loch, coastal water or other body of water). The use of caging, mesh or netting is of course known in commercial fish farming context in order to keep the fish in a desired location. Allowing water to flow through the boundaries is useful in maintaining a clean environment for the fish, since it allows waste products from the fish to be conveyed (via gravity and/or water currents) out of the enclosure.

Preferably, the light output members are disposed on the fish swimming space side of the cage, mesh or net, so as substantially not to illuminate the cage, mesh or net. This can be important, in order to provide the illusion to the fish that there is a moving visual stimulus. Illumination of stationary objects such as the boundaries of the enclosure is thereby desirably avoided.

Preferably, the enclosure has a lateral dimension (e.g. length or width) of at least 10m, preferably at least 30m, more preferably at least 50m and most preferably at least 70m. Similarly, the path length of the series of light output members is preferably at least 30m, or at least 90m, more preferably at least 150m and most preferably at least 210m.

Preferably, the series of light output members is operable to provide a series of moving visual stimuli, i.e. more than one moving visual stimulus moving in a coordinated way. This is of interest in order to provide the moving visual stimulus to as many fish as possible. For example, the light output members may be operated so that, at any one time instant, about half are outputting light and about half are not, in a series of moving visual stimuli around the enclosure.

Preferably, the light output members are spaced apart by a separation dependent upon the fish body lengths, e.g. the average fish body length. For example, the light output members may have a minimum separation of one to two times fish body length, e.g. about 1.5 body lengths.

Preferably, the enclosure has a plurality of light output modules, each module providing one or more of said light output members. The modules provide a structure to allow the connection of individual light output members. In use, the light output module is adapted for at least partial submersion in water. This can be of assistance in providing a light output in deep water in situations where illumination provided from a source above the surface may not be appropriate.

Preferably, individual light output modules are operable independently of each other. The independent operation of the individual light output modules allows control of the moving visual stimuli around the enclosure.

Additionally or alternatively, individual light output members of a light output module are operable independently of the other light output members of the light output module. Individual control of each light output member allows the moving visual stimulus to be provided by a light output module along the path. Furthermore, individual control of each light output module allows the moving visual stimulus to be provided by a combination of light output members of different light output modules.

Preferably, the light output modules are elongate and are for arrangement along the path. Preferably, the light output module is disposed with its elongate axis substantially upright, so as to provide a light output of greater upright extent than lateral extent. This allows the moving visual stimulus to be provided by more than one light output module at once, if necessary, whilst restricting the lateral extent of the moving visual stimulus. Furthermore, the elongate nature of the light output module allows the moving visual stimulus also to be elongate. This vertical extent of the moving visual stimulus is useful in providing the moving visual stimulus to as many fish as possible in the enclosure.

Alternatively, the light output modules are elongate along the said path. The moving visual light stimulus may be provided by the operation in sequence of light output members along the light output module. Furthermore, a moving light stimulus of greater vertical extent may be obtained from an assembly of light modules by operation in sequence of light output members on different light output modules. The series of light output modules may be a substantially upright stack of modules, each module elongate along the said path.

Preferably, the height of the light output modules is at least 1 m. The total height may be up to 10 m. If necessary, several (e.g. 3 or more) light output modules may be assembled to give this height. Typically, the height is around 1.5 - 2 m minimum and 3-6 m maximum.

For salmonid species, the optimal swimming speed is in the region of 1.0 BL/s ((body lengths per second) Houlihan and Laurent, 1987; East and Magnan, 1987; Totland et al. 1987; Christiansen et al. 1989; Christiansen and Jobling, 1990; Christiansen et al. 1992; Jobling et al., 1993; Jørgensen and Jobling, 1993) and for carangid species (e.g *Seriola* sp.) the optimal swimming speed is in the region of 1.6 BL/s (Yogata and Oku, 2000). These optimal speeds (in BL/s) will typically remain the same irrespective of enclosure size (unless the enclosure is restrictively small and adds extra "turning cost"). For example, for a 30 cm salmonid the absolute speed equates to around 30 cm/s and for a 30cm Japanese Kingfish (*Seriola* sp.) it is in the region of 48 cm/s. The visual stimulus speed preferably matches the optimal swimming speed, e.g. at least 1 BL/s.

Preferably, the visual stimulus has a brightness of at least 10,000 millicanela (mCd), and may be at least 50,000 mCd.
For example, the brightness may be 72,000 mCd (approximately 70 lumens.

Preferably, the light output member is one or more (preferably a plurality) of light sources such as LEDs. LEDs provide a relatively cheap and reliable light source.

Alternatively, each light output module has at least one light source and at least one light guide, the light guide being operable to guide light from the light source for directing the light towards the fish. The light guide may guide light from the light source by reflection, e.g. total internal reflection. Most preferably, the light guide is operable to output light substantially uniformly along its length. Preferably, the light guide is elongate.

Preferably, in use, the light source is located above the light guide so that, in use, the light source is located above the water level. This can be of assistance in preventing corrosion of the electrical contacts in the light source and may provide the light source with a longer useful life. Preferably, the light source is one or more (preferably a plurality) of LEDs.

The inventor considers that green light (approx. 525 nm wavelength) is the optimal colour to use. This is based on the optical properties of water; yellow-green light is absorbed less in turbid littoral water and blue-green light penetrates to deeper depths. Evidence also suggests that the retinal pigments of salmonid fishes are most sensitive to green light.

Preferably, the control means is operable to vary the number and/or speed and/or brightness and/or lateral extent of the moving visual stimulus or stimuli. In this way, the nature of the moving visual stimulus can be adapted to be most suited to the fish in the enclosure. For example, as the fish grow and increase in average body length, the optimum absolute swimming speed for that population of fish will change. In that case, the control means may operate so that the speed of the moving visual stimulus also increases, preferably at'the same rate.

The present inventors have realised that the invention has wider application than simply encouraging fish to swim at their optimum swimming speed. The invention may also be used to guide fish along a predetermined path. This is possible if the predetermined path has a suitable series of light output members alongside it. Guiding fish in this way has useful applications in size grading of fish. It also has useful applications in harvesting fish or other manipulation of the fish in such a way as to reduce the stress applied to the fish. This results in an improvement in the quality of the fish product.

Accordingly, the method preferably further includes the step of guiding the fish along a predetermined branch path using a moving visual stimulus produced via a branch series of light output members along said branch path.

Preferably, the enclosure is located in a body of water subject to water current, said current flowing through the enclosure. Typically, the enclosure defines a substantially continuous, closed loop swimming route for the fish. In this situation, the series of light output members is preferably operated to provide a visual stimulus moving at a speed relative to the enclosure, said speed varying around the closed loop according to the local speed of the water current relative to the enclosure. More preferably, the speed of the moving visual stimulus is controlled to be substantially uniform relative to the water current speed along the closed loop. In this way, the optimum swimming speed of the fish relative to the water can be maintained around the swimming route for the fish.

For the avoidance of doubt, it is here noted that, preferably, the invention is not a method of treatment of the animal body by therapy. Preferably, the advantages provided by the invention are in the nature of improving the efficiency of commercial aquaculture and of improving the quality of fish flesh in the product of that industry.

### Brief Description of the Drawings

Embodiments of the invention will now be described, by way of example, with reference to the drawings, in which:
Fig.1 shows a schematic representation of an apparatus according to an embodiment of the invention.
Fig. 2 shows a graph illustrating test results obtained using an embodiment of the invention.
Figs. 3A and 3B show further graphs illustrating test results obtained using an embodiment of the invention.
Fig. 4 shows a graph illustrating test results obtained using an embodiment of the invention.
Figs. 5A and 5B show further graphs illustrating test results obtained using an embodiment of the invention.
Fig. 6 shows a graph illustrating test results obtained using an embodiment of the invention.
Fig. 7 shows a graph illustrating test results obtained using an embodiment of the invention.

### Detained Description of Preferred Embodiments

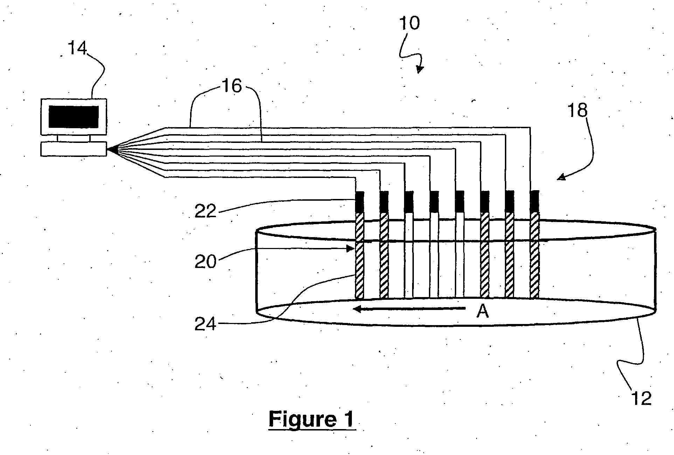

Fig. 1 shows a schematic representation of an apparatus according to an embodiment of the invention, set up for use on an enclosure 12 for holding fish. In the drawing, the apparatus 10 include a control computer 14 with suitable control leads 16 attached to a series 18 of light output modules. Each light output module 20 has a light source 22 at its upper end with a light guide 24 suspended below the light source, in light communication with the light source.

In the drawing, only eight light output modules are shown. However, in the test set-up described below, 24 such light output modules were arranged around the enclosure 12.

The light sources 22 are LED light sources. Preferably, they have several LEDS packed into a housing. Such an arrangement is able to make use of the fact that LEDs are available at relatively low cost and that they are relatively robust light sources.

Suitable light sources are 5mm ultrabright LEDs that typically emit about 12000 mCd at 3.5V, 20 mA. These are housed in a cylindrical, plastic-moulded LED unit. The light sources are arranged in a concentric ring facing directly down and through the length of the light guide.

Each light guide 24 is a 60 cm tall, 14 mm wide clear acrylic polymer rod (e.g. cylinder), co-extruded with an 8 mm wide reflective strip disposed within the rod, parallel with the principal axis of the rod. Light input at the top of the light guide is guided along the length of the rod. The reflective strip causes a portion of the light to be reflected outwardly from the rod. The light output modules are oriented so that the reflective strip faces towards the centre of the enclosure 12. The reflective strip is disposed within the rod such that the light output from the light output module falls only gradually along the length of the light guide. Ideally, the light output is substantially uniform along the length of the light guide. In an alternative embodiment, the light guide has a light source disposed at each end, to improve the uniformity of illumination provided by the light output module.

In use, the light output modules are controlled using the computer 14 using a Labtech Notebook program via a PCI board (Measurement Computing DIO24H). Each light output module is caused to emit light by powering the LEDs in light source 22. This powering is carried out in sequence along the series. In Fig. 1, the light output modules that are not emitting light are shown with hatched light guides.

The time for which each light output module emits light is controlled so that, in this example, a moving visual stimulus is provided that consists of three adjacent light output modules. Movement of the visual stimulus is caused by de-powering one of the light output modules at one side of the group of three light output modules and powering up the next light output module in the series at the other side. In this way, the visual stimulus is caused to move in the direction of arrow A in Fig. 1.

The use of more than one light output module at a time to produce the moving visual stimulus reduces the ratio of the speed:width of the stimulus. This reduces the apparent jerkiness of the movement of the stimulus.

Depending on various factors (e.g. flow regime, prior history of the fish etc) the stimulus or stimuli may move either in a clockwise or anti-clockwise direction.

As will be clear to the skilled person, appropriate modification of the control software allows the speed, direction and width of the moving visual stimulus to be varied. Furthermore, suitable control allows the creation of a series of moving visual stimuli. These parameters are set according to the fish to be contained within the enclosure.

The enclosure 12 illustrated in Fig. 1 is a cylindrical tank filled with water (not shown). The light guides 24 are immersed in the water but the light sources 22 sit above the light guides, out of the water. The enclosure may, however, use netting, caging or mesh for its outer perimeter.

For commercial fish farming applications, the enclosure should be of a suitable size and shape to allow fish to sustain optimal swimming speed (without overly tight turning angles). The inventors have found that the best results are gained when fish are held in circular enclosures (e.g. circular seacages or tanks) and are not impeded by any physical object that would otherwise create complex and inefficient swimming behaviour.

The light output modules are arranged so that the spacing between adjacent light guides is 1.5 body lengths or less. For example, if the body length of the fish of interest is 30 cm, then the light output modules are preferably spaced 45 cm apart or less in the direction of movement of the moving visual stimulus. The light output modules may be arranged as shown in Fig. 1, or two or more light output modules may be arranged one above the other to provide more than one series of light output modules, in order to increase the height of the moving visual stimulus.

To induce optimal swimming speeds in farmed fish, the inventors have realised that several factors are considered before setting the rotational velocity of the optomotor stimulus. These are set out below.

### Curved swimming path

Fish that do not swim along a straight path will encounter an extra cost as a result of the centripetal force that is required to maintain a curved swimming trajectory (Weihs, 1981). Optimal swimming speed will therefore depend upon 1) fish body length, 2) the radius of the holding facility (or fish swimming radius) and 3) the rotational velocity of the visual stimuli. By calculating the extra swimming cost that is required to maintain a curved swimming path (Weihs, 1981), the optimal swimming speed of fish (of known length) in a facility of a given size can be controlled by adjusting the rotational velocity of the visual stimuli.

For example, if a relatively large species of fish is contained in a relatively small seacage and incurs a 15% cost as a result of curvi-linear swimming, the speed of the optomotor stimuli must be reduced by 15% from the known "straight line" optimal swimming speed of the species.

Curvi-linear costs of more than 20% reflect that fish are turning sharply on a regular basis and linear (i.e. aerobic "low cost" swimming) is no longer maintained. Under these conditions, the benefits of sustained swimming might not be gained. The size of any holding facility should therefore be scaled appropriately for the size of fish it contains.

### Water currents

Water currents may incur an extra cost of swimming and must be considered in the context of optimal swimming speed. For example, if a 30 cm fish has an optimal swimming speed of 1 body length per second (BL/s) and is under the influence of a unidirectional 30 cm/s current for 50% of the time (e.g. in a seacage), the "straight line" optimal optomotor speed should be reduced to a speed approximating 0.5 BL/s.

Alternatively, the speed of the optomotor stimulus may be varied around the enclosure, in order to account for the local water current speed relative to the light output members.

### Start-up speed

When the apparatus is first activated or the lighting speed is adjusted, it can be important to ensure that the set speed is reached over several hours (i.e. progressively) and not immediately. Fish should be allowed to adapt slowly to any change in the moving stimulus otherwise confusion occurs and fish will lag behind the stimulus (i.e. do not swim at their optimal swimming speed).

### Lighting wavelength and intensity

The light intensity of the moving visual stimuli should be sufficiently high to override stationary visual stimuli (e.g. seacage netting) and penetrate background turbidity and the wavelength of the lights should match the photoreceptor wavelength sensitivity of the given farmed fish's eye. Optimal lighting wavelength and intensities improve the behavioural optomotor response of the fish.

### Examples

Behavioural trials were conducted on horse mackerel (Trachurus trachurus) and Atlantic salmon (Salmo salar L.) to assess whether fish swimming behaviour (i.e. speed and direction) could be controlled using embodiments of the invention, as illustrated in Fig. 1 and described above.

### Behavioural monitoring of Mackerel

A CCD video camera was mounted 1.3 m above the circular tank and connected to a computer equipped with a frame grabber (Visionetics VFG-512 BC) capable of digitizing and analysing single video frames with a resolution of 256 x 256 pixels at 10 frames per second. The geometric centre of a flat, black, oval (1.5cm x 3cm) target, glued with VetbondTM to the dorsal nasal region of a single fish in a group, was determined using a customized software programme and its x, y coordinate transmitted, via the RS-232 port, to a data acquisition package (Labtech Notebook). Fish positional (x, y) data was stored on the hard drive for later calculations of swimming speed (i.e. the cumulative distance swum in body lengths per second).

### Mackerel test 1

A single horse mackerel (Fork Length (FL) = 18 cm) was tracked over a 7 hour period to initially assess the efficacy of the optomotor apparatus in controlling fish swimming speeds.

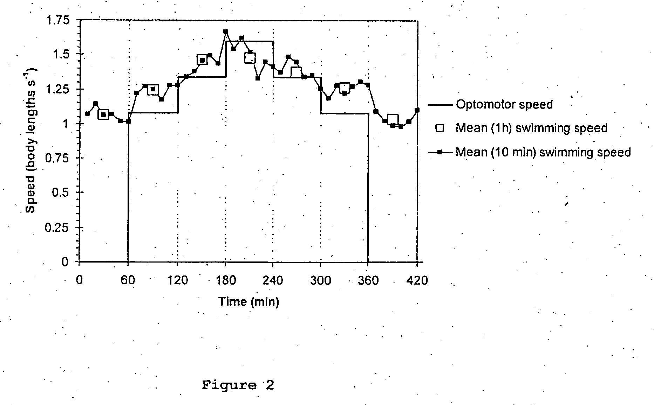

Fig. 2 indicates that the single fish routinely swam at about 1 BL/s when the optomotor stimulus was stationary but its swimming speed could be controlled in an increasing and decreasing direction using relatively large stepwise changes in optomotor speed. It should be noted that this size of fish struggled to swim at the highest optomotor speed (1.6BL/s) in the enclosure used because it had to turn continuously to keep up with the stimulus. For this reason the inventors decided that future experiments should only examine the behavioural (and physiological) responses of fish with FL < 18cm.

### Mackerel test 2

A single 13.5 cm long horse mackerel (within group of three (13-15 cm) individuals) was tracked over a 6 day period to assess:
1) The temporal responsiveness of fish to the lighting optomotor stimulus.
2) An initial insight into optimal protocols for control over the swimming speed of fish using the non-mechanical optomotor device.

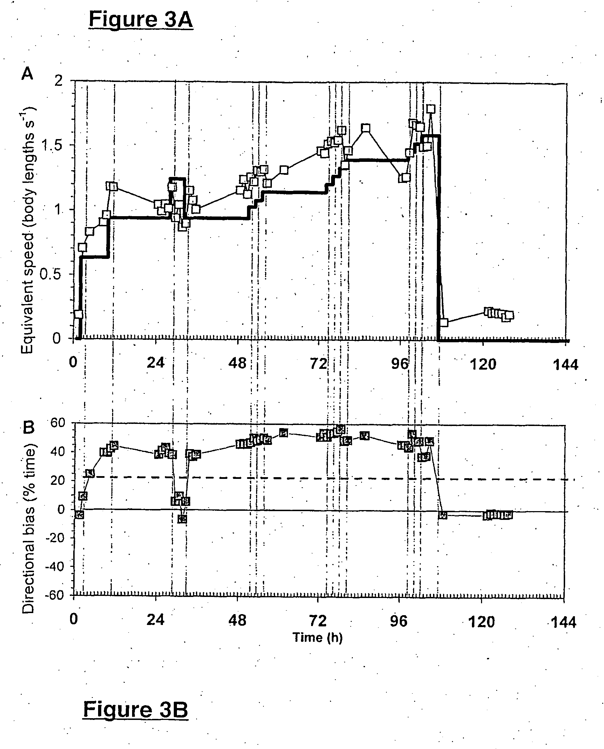

The results are shown in Fig. 3. Fig. 3 shows the effect of moving visual (i.e. optomotor) stimuli on the swimming speed (Fig. 3A) and directional orientation (Fig. 3B) of horse mackerel (FL = 13.5 cm). The bold line indicates the relative speed of the optomotor stimulus.

Note that directional bias (in Fig. 3B) is defined by Herbert and Wells (2002) and indicates preferred swimming direction. A directional bias value in the region of 0 % indicates that there is no preference for swimming direction (and hence in this test no optomotor response). Directional bias values of greater than +25% indicates a positive optomotor response because the fish is swimming in the same direction as the moving visual stimulus. Negative directional bias values indicate that the fish was swimming in the opposite direction of the moving visual stimulus.

Fig. 3 indicates that the non-mechanical optomotor device is highly successful in controlling the swimming speed of schooling horse mackerel. The optomotor device raised sustained routine swimming speed from 0.25 BL/s to 1.5 BL/s. Furthermore, the graphs illustrate that group swimming speeds can only be controlled when small (vs. large) stepwise increases in optomotor speed are made over prolonged periods. The small stepwise increase in optomotor speed consistently resulted in an increase in swimming speed (Fig. 3A) and positive optomotor responses (i.e. directional bias > 25%) (Fig. 3B). When fish are held in groups, it is clear that a large and sudden increase in optomotor speed results in poor optomotor responses and non-directional responses.

### Behavioural monitoring of Salmon

### Salmon test 1

A lighting device for influencing fish swimming behaviour was installed into a 1.2 m diameter fish tank. The lighting device consisted of 48 individual light emitting units and light guiding members, which were arranged vertically and spaced evenly around the outer circumference of the tank.

The individual light emitting units consisted of a cylindrical plastic unit housing a single, ultra-bright green, 3 mm light-emitting diode (LED). The light emitting unit was positioned on top of a Luxaura^{™} cylindrical light guide member (20 cm in length and 13 mm in diameter) (www.luxaura.com). Each light guide member was provided with a reflective strip, disposed parallel with the' principal axis of the cylinder. Light input from a light emitting unit at the top of the light guide was guided along the length of the cylinder, and the reflective strip caused a portion of the light to be reflected outwardly from the cylinder. The light guide members were oriented so that the reflective strip faced towards the centre of the tank.

Each light emitting unit was connected to a computer via a PCI DIO-96H interface board (Measurement Computing Inc, USA) and the sequential firing pattern of the units was controlled by a customised Labtech program operating on the computer. Tests were conducted without any other source of light; the light emitting units were the sole source of visible and non-infra-red light.

The tank was filled with freshwater up to the uppermost level of the light guides (i.e. the light emitting units were not submerged). Water temperature was held at 10.0°C with a cooling unit and water flow was both minimal and non-directional.

The experimental tank was equipped with a CCD video camera (Monacor), four infra-red floodlights and a tracking system (Lolitrack, Loligo, Denmark) for direct quantification of fish behaviour under relatively dark conditions. The tracking system operated at 10 Hz and recorded the position (x, y coordinates) of solitary fish for subsequent calculations of fish swimming speed and directional orientation.

The light stimulus consisted of 4 evenly spaced blocks of light around the tank (with each block consisting of 4 light emitting units and light guiding members being turned "on"). A moving light stimulus was generated around the tank by sequentially firing the lighting blocks at speeds of 0 (stationary control), 0.5, 1.0 and 1.5 body lengths per second (BL/s).

A single Atlantic salmon parr (weight = 21.3 ± 6.6 g; fork length = 12.4 ± 1.2 cm) was tracked over 4 days (24 hours at each of the four lighting speeds 0, 0.5, 1.0 and 1.5 BL/s) to assess the efficacy of the optomotor apparatus in controlling salmon swimming speeds and directional orientation.

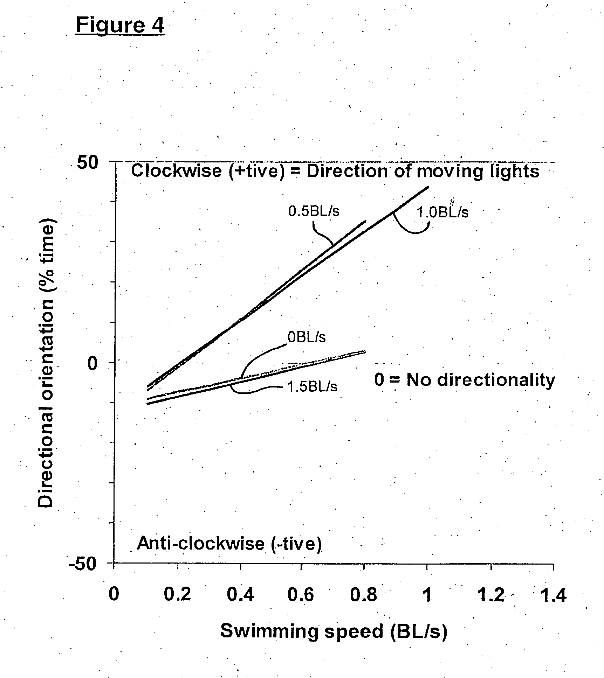

Fig. 4 indicates that the moving light stimuli influenced the swimming behaviour of solitary Atlantic salmon in terms of both swimming speed and directional orientation in the absence of water currents. Contrary to the response of solitary horse mackerel (see Fig. 2), solitary salmon do not swim with the lights at all times. Solitary salmon often remain inactive for prolonged periods of time, but the moving light stimuli is shown to influence the behaviour of Atlantic salmon during active periods.

Fig. 4 shows that lights moving at 1 BL/s induce solitary salmon to swim at faster speeds during active periods.
Lights moving at 0.5 and 1.0 BL/s induce solitary salmon to swim in the direction of the moving lights during active periods. Solitary salmon showed no directionality in the response to either stationary light or lights moving at 1.5 BL/s.

### Salmon test 2

Four large-scale lighting devices were installed into four, 3 m diameter tanks at the Marine Environmental Research Laboratory, Machrihanish, Argyll, and a growth trial was carried out using Atlantic salmon smolts under low water flow conditions.

The customised lighting apparatus in each tank consisted of a power supply, a signal sequencer box and four junction boxes (positioned at regular intervals on the outside of the tank) which controlled the manner in which light was emitted from an array of 72 light emitting units and light guiding members (spread at regular intervals and aligned vertically within the outer perimeter of the tank).

Each light emitting unit consisted of four, green, ultra-bright LEDs encased in a cylindrical plastic shell. Each tank was equipped with 4 junction boxes to minimise the number of individual cables running between the tank and the sequencer box. In effect, 18 light emitting units were connected by individual cables to one junction box on the side of the tank but only one compact (18 core) cable ran from each junction box to the sequencer. Each light emitting unit was connected to the top of an acrylic light-guiding rod (1 m in length and 22 mm in diameter). According to the downward angle of the LEDs, light was guided down the length of the acrylic rod but was refracted outwards and towards the centre of the tank as a result of bevelled grooves at 5 cm intervals.

Software on a PC was used to control the speed of the moving light stimuli as well as the number of lights "on" in each lighting block but, once each lighting program was downloaded to the signal sequencer, the PC could be disconnected and the lighting apparatus operated on a stand-alone basis.

The tanks were covered in thick black plastic and the tests were conducted without any other source of light; the light emitting units were the only source of visible light. There was negligible directional flow of water in the tanks as fresh salt water was provided at a minimal rate of 35 L/min.

A rate of 35 L/min was sufficient to maintain good water quality (e.g. high oxygen levels etc.).

In order to observe and quantify fish swimming behaviour, four underwater video cameras were installed into the tank and video sequences were recorded by a DVD recorder connected to a video quad processor.

A 28 day growth trial was carried using 500 Atlantic salmon smolts (density = 7.23-7.39 kg/m³) in each of the four tanks and lighting stimulus speed was set to either 0 (stationary control), 0.5, 1.0 or 1.5 BL/s. Growth estimates were obtained from the difference in weight and length of 225 tagged fish at the beginning and end of the trial. Food conversion ratios were obtained by monitoring the amount of feed delivered (kg) per incremental increase in fish biomass (kg) over the 28 day period. A change in condition factor [(weight / length³) × 100] was used to indicate a shift in body shape.

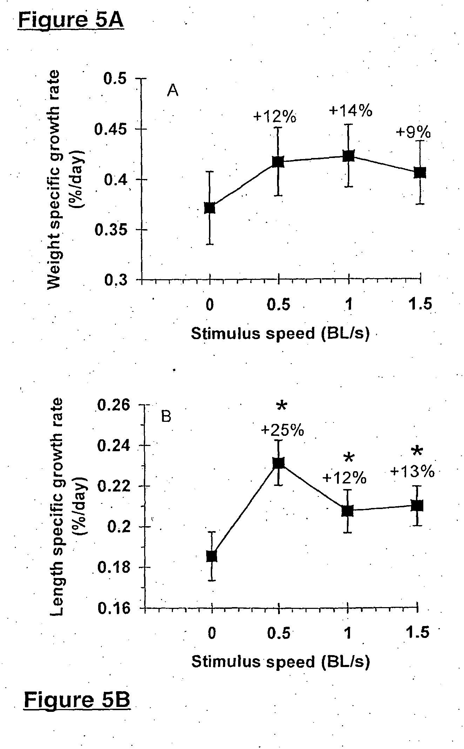

The results are shown in Figs. 5, 6 and 7. Fig. 5 shows the effect of different light stimulus speeds on the weight-specific growth rate and length-specific growth rate of Atlantic salmon smolts exposed over a 28 day growth trial. Data are mean ± 95% confidence intervals. The asterix "*" indicates a significant difference from the 0 BL/s control group (P<0.05).

Figs. 5A and 5B indicate that the moving light stimulus improved the rate at which salmon grew in terms of both weight (Fig. 5A) and length (Fig. 5B). Weight-specific growth was improved by 9-14% and length-specific growth by 12-25%. 1 BL/s appeared to be the optimal speed setting for weight specific growth (13.8% improvement) and 0.5 BL/s for length-specific growth (24.7% improvement).

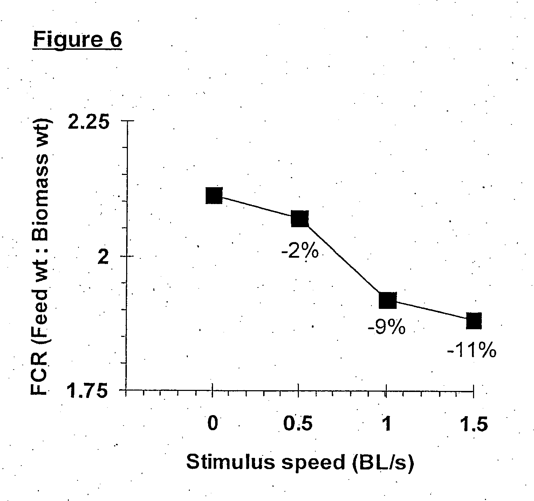

Fig. 6 shows the effect of different light stimulus speeds on the food conversion ratio (FCR) of Atlantic salmon smolts exposed over a 28 day growth trial. Note that feeding efficiency is improved (i.e. less food is consumed per unit weight gain) with lower FCR values. Fig. 6 indicates that moving light improved the feed conversion efficiency of Atlantic salmon. Typically, FCR was reduced (i.e. feeding efficiency improved) as lighting speed increased. Feed conversion was improved by 2, 9 and 11% with lighting stimulus speeds of 0.5, 1.0 and 1.5 BL/s respectively. Moving light adjusted the condition factor (i.e. body shape) of smolts. Smolts typically became more slender and streamlined compared to the O BL/s controls.

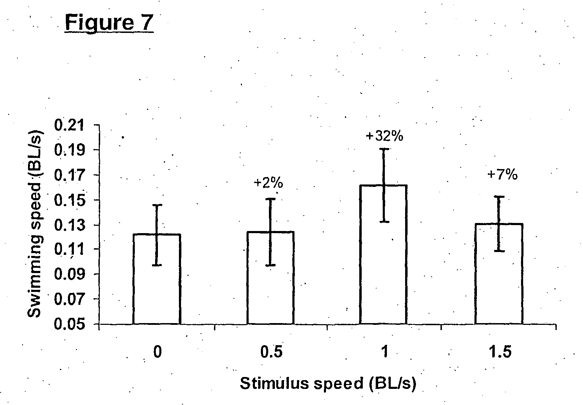

Fig. 7 shows the effect of different light stimulus speeds on the mean swimming speed of Atlantic salmon smolts exposed over a 28 day growth trial. Data are mean ± 95% confidence intervals. Fig. 7 indicates that moving light increased fish swimming speed and therefore influenced the swimming behaviour of Atlantic salmon smolts under commercial rearing conditions. Although smolts were not active at all times, mean swimming speed was increased by 2, 32 and 9% with lighting stimulus speeds of 0.5, 1.0 and 1.5 BL/s.

Modifications of these embodiments, further embodiments and modifications thereof will be apparent to the skilled person on reading this disclosure and as such are within the scope of the invention.

### List of references

Adams, C.E., Huntingford, F.A., Krpal, J., Jobling, M. and Burnett, S.J. (1995). Exercise, agonistic behaviour and food acquisition in Arctic charr, Salvelinus alpinus. Env. Biol. Fish. 43: 213-218.
Anstis, S., Hutahajan, P. and Cavanagh, P. (1998). Optomotor test for wavelength sensitivity in guppyfish (Poecilia reticulata). Vision Res., 38: 45-53.
Arimoto, T., Park, J.S. and Inoue, M. (1984) Reaction of Ugui Tribolodon hakonensis toward the moving net. J. Tokyo Uni. Fish., 66: 23-35.
Azuma, T. Can water-flow induce an excellent growth of fish; effects of water flow on the growth of juvenile masu salmon, Oncorhynchus masou. World Aquaculture, Dec. 26-29.
Boesgaard, L., Nielsen, M.E. and Rosenkilde, P. (1993). Moderate exercise decreases plasma cortisol levels in Atlantic salmon (Salmo salar). Comp. Biochem. Physiol., 106A: 641-643.
Bultler, P.J., Metcalfe, J.D. and Ginley, S.A. (1986). Plasma catecholamines in the lesser spotted dogfish and rainbow trout at rest and during different levels of exercise. J. Exp. Biol., 123: 409-421.
Christiansen, J.S. and Jobling, M. (1990). The behaviour and the relationship between food intake and growth of juvenile Arctic charr, Salvelinus alpinus L., subjected to sustained exercise. Can. J. Zool., 68: 2185-2191.
Christiansen, J.S., Ringø, E. and Jobling, M. (1989). Effects of sustained exercise on growth and body composition of first-feeding fry of Arctic charr, Salvelinus alpinus (L.). Aquaculture, 79: 329-335.
Christiansen, J.S., Svendsen, Y.S. and Jobling, M. (1992). The combined effects of stocking density and sustained exercise on the behaviour, food intake, and growth of juvenile Arctic charr (Salvelinus alpinus L.). Can. J. Zool., 70: 115-122.
Dabrowski, K.R. (1986) A new type of metabolism chamber for the determination of active and postprandial metabolism of fish, and consideration of results for coregonid and salmon juveniles. J. Fish Biol., 28: 105-117.
Davie, P.S., Wells, R.M.G. and Tetens, V. (1986). Effects of sustained swimming on rainbow trout muscle structure, blood oxygen transport, and lactate dehydrogenase isozymes: Evidence for increased aerobic capacity of white muscle. J. Exp. Zool. 237: 159-171.
Davison, W. and Goldspink, G. (1977). The effect of prolonged exercise on the lateral musculature of the brown trout (Salmo trutta). J. Exp. Biol. 70: 1-12.
Davison, W. (1989). Training and its effects on teleost fish. Comp. Biochem. Physiol. 94A:1-10.
Davison, W. (1997) The effects of exercise training on teleost fish, a review of recent literature. Comp. Biochem. Physiol., 117A: 67-75.
East, P. and Magnan, P. (1987). The effect of locomotor activity on the growth of brook trout, Salvelinus fontinalis Mitchill. Can. J. Zool. 65: 843-846.
Fuiman, L.A. and Delbos, B.C. (1998). Developmental changes in visual sensitivity of red drum Sciaenops ocellatus. Copeia, 4: 936-943.
Greer Walker, M. and Pull, G. (1973). Skeletal muscle function and sustained swimming speeds in the coalfish Gadus virens L. Comp. Biochem. Physiol., 44A: 495-501.
Hammer, C. (1994). Effects of endurance swimming on the growth of 0- and 1-age group of whiting, Merlangius merlangus, Gadidae. Arch. Fish. Mar. Res. 42: 105-122.
Harden Jones, F.R. (1963), The reaction of fish to moving backgrounds. J. Exp. Biol., 40: 437-446.
H-asegawa, E. (1998). Study of measurement of spectral sensitivity under scotopic conditions using optomotor reaction in fishes. Bull. Japanese Soc. Sci. Fish., 64: 626-630.
He, P. and Wardle, C.S. (1988). Endurance at intermediate swimming speeds of Atlantic mackerel, Scomber scombrus L., Herring, Clupea harengus L., and Saithe, Pollachius virens L. J. Fish Biol., 33: 255-266.
Herbert, N.A., Macdonald, J.A., Wells, R.M.G. and Davison, W. (2003) A difference in optomotor behaviour of two Antarctic nototheniid fishes is correlated with the presence of a choroid rete mirabile and Root effect. Polar Biol. 26: 411-415.
Herbert, N.A. and Wells, R.M.G. (2002) The effect of strenuous exercise and β-adrenergic blockade on the visual performance of rainbow trout, Oncorhynchus mykiss. J. Comp. Physiol. B. 172: 725-731.
Herbert, N.A., Wells, R.M.G. and Baldwin, J. (2002). Correlates of choroid rete development with the metabolic potential of various topical reef fish and the effect of strenuous exercise on visual performance. J. Exp. Mar. Biol. Ecol. 275: 31-46.
Hinterleitner, S., Huber, M., Lackner, R. and Wieser, W. (1992). Systemic and enzymatic responses to endurance training in two cyprinid species with different life styles (Teleostei: Cyprinidae). Can. J. Fish. Aquat. Sci. 49: 110-115.
Houlihan, D.F., Laurent, P. (1987). Effects of exercise training on the performance, growth, and protein turnover of rainbow trout (Salmo gairdneri). Can. J. Fish. Aquat.Sci. 44: 1614-1621.
Iguchi, K., Ito, F., Ogawa, K., Matsubara, N.', Yodo, T. and Yamasaki, T. (2002). Reduction of transport stress of ayu by obligated schooling. Fish. Sci.'68: 849-853.
Jobling, M., Baardvik, B.M., Christiansen, J.S. and Jørgensen, E.H. (1993). The effects of prolonged exercise training on growth performance and production parameters in fish. Aquaculture International 1, 95-111.
Johnston, I.A. and Moon, T.W. (1980). Exercise training in skeletal muscle of brook trout (Salvelinus fontinalis). J. Exp. Biol., 87: 177-194.
Jørgensen, E.H. and Jobling, M. (1993). The effects of exercise on growth, food utilisation and osmoregulatory capacity of juvenile Atlantic salmon, Salmo salar. Aquaculture, 116: 233-246.
Kawamura, G. and Hara, S. (1980). The optomotor reaction of milkfish larvae and juveniles. Bull. Japanese Sci. Fish., 46: 929-932.
Kawamura, G. and Washiyama, N. (1989) Ontogenetic changes in behaviour and sense organ morphogenesis in largemouth bass and Tilapia-nilotica. Trans. Am. Fish. Soc., 118: 203-213.
Lackner, R., Wieser, R., Huber, M. and Dalla Via, J. (1988). Responses of intermediary metabolism to acute handling stress and recovery in untrained and trained Leuciscus cephalus (Cyprinidae, Teleostei). J. Exp. Biol. 140: 393-404.
Leon,.K.A. (1986). Effect of exercise on feed consumption, growth, feed conversion, and stamina of Brook trout. Progressive Fish Culturist 48: 43-46.
Lucas, M.C., Johnstone, A.D.F and Tang, J. (1993). An annular respirometer for measuring aerobic metabolic rates of large, schooling fishes. J. Exp. Biol., 175: 325-331.
Masuda, R. and Tsukamoto, K. (1998) The ontogeny of schooling behaviour in the striped jack. J. Fish Biol., 52: 483-493.
Milligan, C.L., Hooke, G.B. and Johnson, C. (2000). Sustained swimming at low velocity following a bout of exhaustive exercise enhances metabolic recovery in rainbow trout. J. Exp. Biol., 203: 921-926.
Nahhas, R., Jones, N.V. and Goldspink, G. (1982). Growth, training and swimming ability of young trout (Salmo gairdneri R.) maintained under different salinity conditions. J. Mar. Biol. Ass. U.K., 62: 699-708.
Neave, D.A. (1984) The development of visual acuity in larval plaice (Pleuronectes platessa L.) and turbot (Scophthalmus maximus L.). J. Exp. Mar. Biol. Ecol., 78: 167-175.
Pankhurst, P.M. (1994) Age-related changes in the visual acuity of larvae of New Zealand snapper, Pagurus auratus. J. Mar. Biol. Assoc. U.K., 74: 337-349.
Pener-Salomon, H. (1972) The optomotor response of the fishes Acanthbrama terrae-sanctae and Barbus canis at different light intensities. Israel J. Zool., 21: 113-122.
Richmonds, C. and Dutta, H.M. (1992) Effect of malthion on the optomotor behaviour of bluegill sunfish, Lepomis macrochirus. Comp. Biochem. Physiol., 102C: 523-526.
Schaerer, S. and Neumeyer, C. (1996) Motion detection in goldfish investigated with optomotor response is "colour blind". Vision research, 36: 4025-4034.
Shanghavi, D.S. and Weber, J.M. (1999). Effects of sustained swimming on hepatic glucose production of rainbow trout. J. Exp. Biol. 202: 2161-2166.
Shaw, E. and Tucker, A. (1965). The optomotor reaction of schooling carangid fishes. Anim. Behav., 13: 330-336.
Sänger, A.M. (1992). Effects of training on axial muscle of two cyprinid species: Chondrostoma nasus (L.) and Leuciscus cephalus (L.) J. Fish Biol. 40: 637-646.
Takahashi, M., Murachi, S. and Karakawa, Y. (1968). Studies on the optomotor reaction of fishes. I. Examination of the conditions necessary to induce the reaction of the Japanese Killifish, Oryzias latipes Temminck et Schlegel. J. Fac. Fish. Anim. Husb. Hiroshima Univ., 7: 193-207.
Tang, J. and Wardle, C.S. (1992). Power output of two sizes of Atlantic salmon (Salmo salar) at their maximum sustained swimming speeds. J. Exp. Biol., 166: 33-46.
Teyke, T. and Schaerer, S. (1994) Blind mexican cave fish (Astyanax hubbsi) respond to moving visual stimuli. J. Exp. Biol., 188: 89-101.
Teyssedre, C. and Moller, P. (1982). The optomotor response in weak-electric Mormyrid fish: Can they see? Z. Tierpsychol., 60: 306-312.
Totland, G.K., Kryvi, H., Jødestøl, K.A., Christiansen, E.N., Tangerås, A. and Slinde, E. (1987). Growth and composition of the swimming muscle of adult Atlantic salmon (Salmo salar L.) during long-term sustained swimming. Aquaculture, 66: 299-313.
Van Der Meer, H.J. (1994). Ontogenetic change of visual thresholds in the cichlid fish Haplchromis sauvagei. Brain. Behav. Evol., 44: 40-49.
Veselov, A.E., Kazakov, R.V., Sysoyeva, M.I. and Bahmet, I.N. (1998). Ontogenesis of rheotactic and optomotor responses of juvenile Atlantic salmon. Aquaculture, 168: 17-26.
Wardle, C.S., Soofiani, N.M., O'Neill, F.G., Glass, C.W. and Johnstone, A.D.F. (1996) Measurements of aerobic metabolism of a school of horse mackerel at different swimming speeds. J. Fish Biol., 49: 854-862.
Weihs, D. (1981). Effects of swimming path curvature on the energetics of fish motion. Fish. Bull. 79, 171-176.
Yogata, H. and Oku, H. (2000). The effect of swimming exercise on growth and whole-body protein and fat contents of fed and unfed fingerling yellowtail. Fish. Res. 66: 1100-1105.
Young, P.S. and Cech, J.J. (1993a). Effects of exercise conditioning on stress responses and recovery in cultured and wild young-of -the-year striped bass, Morone saxatilis. Can. J. Fish. Aquat. Sci., 50: 2094-2099.
Young, P.S. and Cech, J.J. (1993b). Improved growth, swimming performance, and muscular development in exercise-conditioned young-of-the-year striped bass (Morone saxatilis). Can. J. Fish. Aquat. Sci., 50: 703-707.
Young, P.S. and Cech, J.J. (1994a). Optimum exercise conditioning velocity for growth, muscular development, and swimming performance in young-of-the-year striped bass (Morone saxatilis). Can. J. Fish. Aquat. Sci., 51: 1519-1527.
Young, P.S. and Cech, J.J. (1994b). Effects of different exercise conditioning velocities on the energy reserves and swimming stress responses in young-of-the-year striped bass (Morone Saxatilis). Can. J. Fish. Aquat. Sci., 51: 1528-1534.

## Claims

1. An enclosure for fish, defining a space within which the fish can swim, the enclosure having a series of light output members disposed along a substantially closed path to define a substantially continuous swimming route for the fish, said light output members being operable to provide a moving visual stimulus along the substantially closed path by output of light in sequence from the series of light output members thereby to influence the swimming behaviour of the fish.

2. An enclosure according to claim 1 wherein the series of light output members is disposed at an outer perimeter of the enclosure, the fish swimming space being located internally, of the series of light output members.

3. An enclosure according to claim 1 wherein the series of light output members is disposed at an inner perimeter of the enclosure, the fish swimming space being located externally of the series of light output members.

4. An enclosure according to any one of claims 1 to 3 having a cage, mesh or net for submersion in saltwater or freshwater.

5. An enclosure according to claim 4 wherein the light output members are disposed on the fish swimming space side of the cage, mesh or net, so as substantially not to illuminate the cage, mesh or net.

6. An enclosure according to any one of claims 1 to 5 having a plurality of light output modules, each module providing one or more of said light output members.

7. An enclosure according to claim 6 wherein individual light output modules are operable independently of each other.

8. An enclosure according to claim 6 wherein individual light output members of a light output module are operable independently of the other light output members of the light output module.

9. An enclosure according to claim 6 or claim 7 wherein each light output module is elongate and is disposed with its elongate axis substantially upright, so as to provide a light output of greater upright extent than lateral extent.

10. An enclosure according to claim 6 or claim 7 wherein each light output module is elongate along said substantially closed path.

11. An enclosure according to any one of claims 1 to 10 wherein the series of light output members is operable to provide a series of moving visual stimuli.

12. An apparatus for influencing the swimming behaviour of fish, the apparatus having:
a plurality of light output modules, each providing one or more light output members, said modules being for arrangement so as to organise the light output members in a series along a substantially closed path to define a substantially continuous swimming route for the fish;
control means for controlling the light output members, wherein each light output module is adapted for at least partial submersion in water and the control means is capable of controlling the light output members to provide a moving visual stimulus along the substantially closed path by output of light in sequence from the series of light output members.

13. An apparatus according to claim 12 wherein each light output module has at least one light source and at least one light guide, the light guide being operable to guide light from the light source for directing the light towards the fish.

14. An apparatus according to claim 13 wherein the light guide is elongate and is operable to output light substantially uniformly along its length.

15. An apparatus according to claim 13 or claim 14 wherein, in use, the light source is located above the light guide so that, in use, the light source is located above the water level.

16. An apparatus according to any one of claims 12 to 15 wherein the control means is operable to vary the number and/or speed and/or brightness and/or lateral extent of the moving visual stimulus or stimuli.

17. An apparatus according to claim 12 wherein the light output modules are elongate and are for arrangement along the substantially closed path.

18. An apparatus according to claim 17 wherein individual light output modules are operable independently of each other.

19. An apparatus according to claim 17 wherein individual light output members of a light output module are operable by the control means independently of the other light output members of the light output module.

20. A method of stimulating an optomotor response in fish including locating the fish in an enclosure having a series of light output members disposed along a substantially closed path to define a substantially continuous swimming route for the fish, said light output members being operated to provide a moving visual stimulus along the substantially closed path by output of light in sequence from the series of light output members thereby to influence the swimming behaviour of the fish.

21. A method according to claim 20 further including the step of guiding the fish along a predetermined branch path connected with said continuous swimming route using a moving visual stimulus produced via a branch series of light output members along said branch path in order to grade the fish for size or to harvest the fish.

22. A method according to claim 20 or claim 21, the enclosure being located in a body of water subject to water current, said current flowing through the enclosure, said series of light output members being operated to provide a visual stimulus moving at a speed relative to the enclosure, said speed varying around the closed loop according to the local speed of the water current relative to the enclosure.

23. A method according to claim 22 wherein the speed of the moving visual stimulus is controlled to be substantially uniform relative to the water current speed along the closed loop.

## Patentansprüche

1. Behältnis für Fische, das einen Raum definiert, In welchem die Fische schwimmen können, wobei das Behältnis eine Reihe von Lichtabgabeelementen aufweist, die entlang einem im Wesentlichen geschlossenen Weg angeordnet ist, um eine im Wesentlichen durchgehende Schwimmroute für die Fische zu definieren, wobei die Lichtabgabeelemente ansteuerbar sind, um durch die Abgabe von Licht in einer Reihenfolge von der Reihe von Lichtabgabeelementen einen sich bewegenden visuellen Reiz entlang dem im Wesentlichen geschlossenen Weg bereitzustellen, um **dadurch** das Schwimmverhalten der Fische zu beeinflussen.

2. Behältnis nach Anspruch 1, worin die Reihe von Lichtabgabeelementen an einem Außenumfang des Behältnisses angeordnet ist, wodurch sich der Raum, in welchem die Fische schwimmen, innerhalb der Reihe von Lichtabgabeelementen befindet.

3. Behältnis nach Anspruch 1, worin die Reihe von Lichtabgabeelementen an einem Innenumfang des Behältnisses angeordnet ist, wodurch sich der Raum, in welchem die Fische schwimmen, außerhalb der Reihe von Lichtabgabeelementen befindet.

4. Behältnis nach einem der Ansprüche 1 bis 3 mit einem Käfig, Gitter oder Netz zum Eintauchen in Salzwasser oder Süßwasser.

5. Behältnis nach Anspruch 4, worin die Lichtabgabeelemente auf jener Seite des Raumes des Käfigs, Gitters oder Netzes, in welcher die Fische schwimmen, angeordnet sind, um den Käfig, das Gitter oder Netz im Wesentlichen nicht zu beleuchten.

6. Behältnis nach einem der Ansprüche 1 bis 5 mit einer Vielzahl an Lichtabgabemodulen, wobei jedes Modul ein oder mehrere der Lichtabgabeelemente bereitstellt.

7. Behältnis nach Anspruch 6, worin einzelne Lichtabgabemodule unabhängig voneinander ansteuerbar sind.

8. Behältnis nach Anspruch 6, worin einzelne Lichtabgabeelemente eines Lichtabgabemoduls unabhängig von den anderen Lichtabgabeelementen des Lichtabgabemoduls ansteuerbar sind.

9. Behältnis nach Anspruch 6 oder 7, worin jedes Lichtabgabemodul länglich ist und mit seiner Längsachse im Wesentlichen senkrecht angeordnet ist, um eine stärker senkrechte als seitliche Lichtabgabemenge bereitzustellen.

10. Behältnis nach Anspruch 6 oder 7, worin jedes Lichtabgabemodul entlang dem im Wesentlichen geschlossenen Weg länglich ist.

11. Behältnis nach einem der Ansprüche 1 bis 10, worin die Reihe von Lichtabgabeelementen ansteuerbar ist, um eine Reihe sich bewegender visueller Reize bereitzustellen.

12. Vorrichtung zur Beeinflussung des Schwimmverhaltens von Fischen, wobei dieselbe Folgendes aufweist:
eine Vielzahl an Lichtabgabemodulen, die jeweils ein oder mehrere Lichtabgabeelemente bereitstellt, wobei die Module so angeordnet sind, dass die Lichtabgabeelemente in einer Reihe entlang einem im Wesentlichen geschlossenen Weg ausgerichtet sind, um eine Im Wesentlichen durchgehende Schwimmroute für die Fische zu definieren;
ein Steuermittel zur Steuerung der Lichtabgabeelemente, worin jedes Lichtabgabemodul für zumindest ein teilweises Eintauchen in Wasser ausgebildet ist und das Steuermittel geeignet ist, die Lichtabgabeelemente zu steuern, um einen sich bewegenden visuellen Reiz entlang dem im Wesentlichen geschlossenen Weg durch die Abgabe von Licht in einer Reihenfolge von der Reihe von Lichtabgabeelementen bereitzustellen.

13. Vorrichtung nach Anspruch 12, worin jedes Lichtabgabemodul zumindest eine Lichtquelle und zumindest einen Lichtleiter aufweist, wobei der Lichtleiter ansteuerbar ist, um Licht aus der Lichtquelle zu leiten, damit das Licht In Richtung der Fische gelenkt wird.

14. Vorrichtung nach Anspruch 13, worin der Lichtleiter länglich und ansteuerbar ist, um Licht entlang seiner Länge im Wesentlichen gleichmaßig auszugeben.

15. Vorrichtung nach Anspruch 13 oder Anspruch 14, worin die Lichtquelle bei Verwendung über dem Lichtleiter angeordnet ist, sodass sich die Lichtquelle bei Verwendung oberhalb des Wasserstands befindet.

16. Vorrichtung nach einem der Ansprüche 12 bis 15, worin das Steuermittel ansteuerbar ist, um die Anzahl und/oder Geschwindigkeit und/oder Helligkeit und/oder seitliche Ausdehnung des sich bewegenden visuellen Reizes bzw. der Reize zu variieren.

17. Vorrichtung nach Anspruch 12, worin die Lichtausgabemodule länglich sind und geeignet sind, entlang dem im Wesentlichen geschlossenen Weg angeordnet zu sein.

18. Vorrichtung nach Anspruch 17, worin einzelne Lichtausgabemodule unabhängig voneinander ansteuerbar sind.

19. Vorrichtung nach Anspruch 17, worin einzelne Lichtausgabeelemente eines Lichtausgabemoduls durch das Steuermittel unabhängig von den anderen Lichtausgabeelementen des Lichtausgabemoduls ansteuerbar sind.

20. Verfahren zur Stimulierung einer optomotorischen Reaktion bei Fischen, welches die Lokalisierung der Fische in einem Behältnis umfasst, das eine Reihe von Lichtausgabeelementen aufweist, die entlang einem im Wesentlichen geschlossenen Weg angeordnet sind, um eine im Wesentlichen durchgehende Schwimmroute für die Fische zu definieren, wobei die Lichtausgabeelemente ansteuerbar sind, um einen sich bewegenden visuellen Reiz entlang dem im Wesentlichen geschlossenen Weg durch die Abgabe von Licht in einer Reihenfolge von der Reihe von Lichtabgabeelementen bereitzustellen, um **dadurch** das Schwimmverhalten der Fische zu beeinflussen.

21. Verfahren nach Anspruch 20, weiters umfassend den Schritt des Leitens der Fische entlang einem vorgegebenen Abzweigweg, der mit der durchgehenden Schwimmroute verbunden ist, unter Verwendung eines sich bewegenden visuellen Reizes, der durch eine Abzweig-Reihe von Lichtausgabeelementen entlang dem Abzweigweg erzeugt wird, um die Fische nach Größe zu sortieren oder die Fische zu fangen.

22. Verfahren nach Anspruch 20 oder 21, wobei sich das Behältnis in einem Gewässer mit einer Wasserströmung befindet, wobei die Strömung durch das Behältnis strömt, wobei die Reihe von Lichtausgabeelementen angesteuert wird, um einen sich bewegenden visuellen Reiz mit einer Geschwindigkeit relativ zum Behältnis bereitzustellen, wobei die Geschwindigkeit entlang der geschlossenen Schleife in Übereinstimmung mit der lokalen Geschwindigkeit der Wasserströmung relativ zum Behältnis variiert.

23. Verfahren nach Anspruch 22, worin die Geschwindigkeit des sich bewegenden visuellen Reizes so gesteuert wird, dass sie relativ zur Wasserströmungsgeschwindigkeit entlang der geschlossenen Schleife im Wesentlichen gleichförmig ist.

## Revendications

1. Enclos pour poissons, définissant un espace dans lequel les poissons peuvent nager, l'enclos ayant une série d'éléments d'émission de lumière disposés le long d'un chemin sensiblement fermé pour définir un itinéraire de nage sensiblement continu pour les poissons, lesdits éléments d'émission de lumière étant actionnables pour fournir un stimulus visuel mobile le long du chemin sensiblement fermé par l'émission de lumière en séquence depuis la série d'éléments d'émission de lumière en influençant ainsi la nage des poissons.

2. Enclos selon la revendication 1, dans lequel la série d'éléments d'émission de lumière est disposée à un périmètre extérieur de l'enclos, l'espace de nage pour les poissons se situant à l'intérieur de la série d'éléments d'émission de lumière.

3. Enclos selon la revendication 1, dans lequel la série d'éléments d'émission de lumière est disposée à un périmètre intérieur de l'enclos, l'espace de nage pour les poissons étant situé à l'extérieur de la série d'éléments d'émission de lumière.

4. Enclos selon l'une quelconque des revendications 1 à 3 ayant une cage, maille ou filet pour l'immersion dans de l'eau salée ou dans de l'eau fraîche.

5. Enclos selon la revendication 4, dans lequel les éléments d'émission de lumière sont disposés sur le côté de la cage, maille ou filet de l'espace de nage pour les poissons de manière à sensiblement ne pas éclairer la cage, maille ou filet.

6. Enclos selon l'une quelconque des revendications 1 à 5, ayant une pluralité de modules d'émission de lumière, chaque module réalisant un ou plusieurs desdits éléments d'émission de lumière.

7. Enclos selon la revendication 6, dans lequel des modules d'émission de lumière individuels sont actionnables indépendamment les uns des autres.

8. Enclos selon la revendication 6, où des éléments d'émission de lumière individuels d'un module d'émission de lumière sont actionnables indépendamment des autres éléments d'émission de lumière du module d'émission de lumière.

9. Enclos selon la revendication 6 ou la revendication 7, dans lequel chaque module d'émission de lumière est oblong et est disposé avec son axe oblong sensiblement verticalement de manière à réaliser une émission de lumière d'une étendue verticale plus grande qu'une étendue latérale.

10. Enclos selon la revendication 6 ou la revendication 7, dans lequel chaque module d'émission de lumière est oblong le long dudit chemin sensiblement fermé.

11. Enclos selon l'une quelconque des revendications 1 à 10, dans lequel la série d'éléments d'émission de lumière est actionnable pour fournir une série de stimuli visuels mobile.

12. Appareil pour agir sur le comportement de nage des poissons, l'appareil ayant:
une pluralité de modules d'émission de lumière, chacun réalisant un ou plusieurs éléments d'émission de lumière, lesdits modules étant pour l'agencement de manière à organiser les éléments d'émission de lumière en une série le long d'un chemin sensiblement fermé pour définir un itinéraire de nage sensiblement continu pour les poissons;
un moyen de commande pour commander les éléments d'émission de lumière, où chaque module d'émission de lumière est conçu pour une immersion au moins partielle dans l'eau, et le moyen de commande est apte à commander les éléments d'émission de lumière pour fournir un stimulus visuel mobile le long du chemin sensiblement fermé par l'émission de lumière en séquence depuis la série d'éléments d'émission de lumière.

13. Appareil selon la revendication 12, dans lequel chaque module d'émission de lumière possède au moins une source de lumière et au moins un guide de lumière, le guide de lumière étant actionnable pour guider la lumière de la source de lumière pour diriger la lumière vers les poissons.

14. Appareil selon la revendication 13, dans lequel le guide de lumière est oblong et est actionnable pour émettre de la lumière sensiblement uniformément sur sa longueur.

15. Appareil selon la revendication 13 ou la revendication 14, dans lequel, en cours d'utilisation, la source de lumière se situe au-dessus du guide de lumière de telle sorte que, en utilisation, la source de lumière se situe au-dessus du niveau de l'eau.

16. Appareil selon l'une quelconque des revendications 12 à 15, dans lequel le moyen de commande est actionnable pour faire varier le nombre et/ou la vitesse et/ou la luminosité et/ou l'étendue latérale du ou des stimuli visuels mobiles.

17. Appareil selon la revendication 12, dans lequel les modules d'émission de lumière sont oblongs et sont prévus pour l'agencement le long du chemin sensiblement fermé.

18. Appareil selon la revendication 17, dans lequel les modules d'émission de lumière individuels sont actionnables indépendamment les uns des autres.

19. Appareil selon la revendication 17, dans lequel les éléments d'émission de lumière individuels d'un module d'émission de lumière sont actionnables par le moyen de commande indépendamment des autres éléments d'émission de lumière du module d'émission de lumière.

20. Procédé pour stimuler une réponse optomotrice dans les poissons incluant la localisation des poissons dans un enclos ayant une série d'éléments d'émission de lumière disposés le long d'un chemin sensiblement fermé pour définir un itinéraire de nage sensiblement continu pour les poissons, lesdits éléments d'émission de lumière étant actionnés pour fournir un stimulus visuel mobile le long du chemin sensiblement fermé par l'émission de lumière en séquence depuis la série d'éléments d'émission de lumière pour agir ainsi sur la nage des poissons.

21. Procédé selon la revendication 20, incluant en outre l'étape consistant à guider les poissons le long d'un chemin de branchement prédéterminé relié audit itinéraire de nage continu en utilisant un stimulus visuel mobile produit par une série de branchements d'éléments d'émission de lumière le long dudit chemin de branchement pour trier les poissons selon la taille ou pour récolter les poissons.

22. Procédé selon la revendication 20 ou la revendication 21, l'enclos se situant dans un corps d'eau soumis à un courant d'eau, ledit courant s'écoulant à travers l'enclos, ladite série d'éléments d'émission de lumière étant actionnée pour fournir un stimulus visuel se déplaçant à une vitesse relativement à l'enclos, ladite vitesse variant autour de la boucle fermée selon la vitesse locale du courant d'eau relativement à l'enclos.

23. Procédé selon la revendication 22, où la vitesse du stimulus visuel mobile est réglée pour être sensiblement uniforme relativement à la vitesse du courant d'eau le long de la boucle fermée.
